(19) Europäisches Patentamt / European Patent Office / Office européen des brevets

(11) **EP 3 913 507 A1**

(12) **EUROPEAN PATENT APPLICATION**

(43) Date of publication:
**24.11.2021 Bulletin 2021/47**

(51) Int Cl.:
**G06F 17/11** (2006.01)

(21) Application number: **21154731.0**

(22) Date of filing: **02.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.05.2020 JP 2020088345**

(71) Applicant: **FUJITSU LIMITED**
**Kanagawa 211-8588 (JP)**

(72) Inventors:
• **Konoshima, Makiko**
  **Kanagawa, 211-8588 (JP)**
• **Tamura, Hirotaka**
  **Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION DEVICE, OPTIMIZATION PROGRAM, AND OPTIMIZATION METHOD**

(57) An optimization method implemented by a computer configured to search for a solution using a replica exchange method, the optimization method includes: generating a reference bit to be referred to by each of a plurality of replicas, based on first states of respective replicas of the plurality of replicas at a time that is predetermined; causing each of the plurality of replicas to refer to the generated reference bit; and specifying second states at a time later than the time.

## FIG. 3

START

SET STATE ($s^1$, $s^2$, $s^3$ ...) OF EACH REPLICA, HAMILTONIAN H(s), COST E(s) TO BE MINIMIZED, AND HAMILTONIAN H0(s) THAT DOES NOT CONSIDER INTERACTION ~S1

GENERATE REFERENCE BIT ~S2

USE s0$^R$ TO PERFORM MCMC WITH HAMILTONIAN H0(s) WITHOUT INTERACTION IN PREDETERMINED STEPS, AND OBTAIN s$^R$ ~S3

PERFORM MCMC WITH HAMILTONIAN IN FORMULA (2) USING STATE s$^R$, AND OBTAIN s AT CERTAIN TIME ~S4

IS REPETITIVE PROCESSING TO BE ENDED? S5

NO

YES

END

EP 3 913 507 A1

**Description**

FIELD

The embodiments discussed herein are related to an optimization device, an optimization program, and an optimization method.

BACKGROUND

Information processing is performed in all fields in today's society. Such information processing is performed by arithmetic devices such as computers, which perform operations and reorganization on a variety of kinds of data and obtain meaningful results to perform prediction, determination, control, and the like. Optimization processing is one approach of this information processing and has become an important field.

One approach of the optimization processing is to solve a discrete optimization problem. In a large-scale multivariable discrete optimization problem, the number of combinations increases explosively, and the calculation time sometimes does not fall within a realistic range in the technique of exhaustively performing calculations to work out all combinations.

As a method for solving such a large-scale multivariable discrete optimization problem, for example, there is simulated annealing (SA) using an Ising-type energy function. In this SA, calculation is performed by replacing a problem to be calculated with an Ising model, which is a model representing behavior of spins of magnetic material.

In the discrete optimization problem, it is important to search for an optimum solution because there is a large number of states called local solutions that are not optimum solutions but take minimum values in local neighborhoods. As for the search for the optimum solution, a replica exchange method (hereinafter referred to as a replica method) in which a copy (replica) of a certain state is used to search for a solution independently for each replica is known.

SUMMARY

[Technical Problem]

However, in the replica method in the above-mentioned prior art, every one replica calculates the interaction term at regular intervals such that the interaction term becomes larger if the one replica is more similar to each of the other replicas, and the interaction term becomes smaller if the one replica is less similar to each of the other replicas. Accordingly, there is a disadvantage that the speed of searching for the optimum solution becomes slower because each replica thoroughly refers to all the other replicas in order to calculate the interaction term.

In one aspect, it is intended to provide an optimization device, an optimization program, and an optimization method that enable an optimum solution to be obtained at higher speed.

[Solution to Problem]

According to an aspect of the embodiments, provided is an optimization method implemented by a computer configured to search for a solution using a replica exchange method. In an example, the optimization method includes: generating a reference bit to be referred to by each of a plurality of replicas, based on first states of respective replicas of the plurality of replicas at a time that is predetermined; causing each of the plurality of replicas to refer to the generated reference bit; and specifying second states at a time later than the time.

[Advantageous Effect of Invention]

The optimum solution may be obtained at higher speed.

BRIEF DESCRIPTION OF DRAWINGS

FIG. 1 is a block diagram illustrating an exemplary functional configuration of an information processing device according to an embodiment;
FIG. 2 is a block diagram illustrating a modification of the functional configuration of the information processing device according to the embodiment;
FIG. 3 is a flowchart illustrating an exemplary operation of the information processing device according to the embodiment;
FIG. 4 is a flowchart illustrating exemplary processing of Markov Chain Monte Carlo methods (MCMC);
FIG. 5 is a block diagram illustrating an exemplary functional configuration of an information processing device that carries out a conventional replica method;
FIG. 6 is an explanatory diagram explaining a comparative example in a ferromagnetic model; and
FIG. 7 is a block diagram illustrating an example of a computer configuration.

DESCRIPTION OF EMBODIMENTS

Hereinafter, an optimization device, an optimization program, and an optimization method according to embodiments will be described with reference to the drawings. Configurations with the same functions in the embodiments are denoted by the same reference signs, and redundant description will be omitted. Note that the optimization device, the optimization program, and the optimization method to be described in the embodiments below are merely examples and do not limit the embodiments. Additionally, each of the embodiments below may be appropriately combined unless otherwise contradicted.

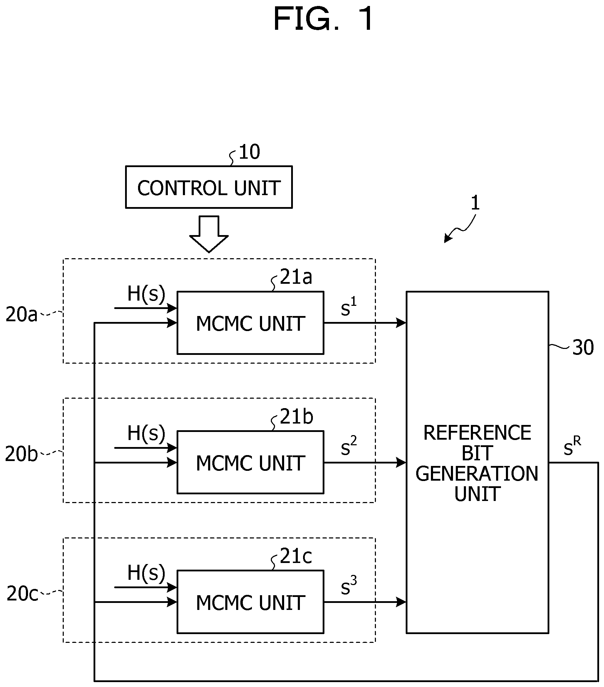

FIG. 1 is a block diagram illustrating an exemplary functional configuration of an information processing device according to an embodiment. As illustrated in FIG. 1, the information processing device 1 includes a control unit 10, a plurality of replicas (20a, 20b, and 20c in the illustrated example), and a reference bit generation unit 30, and is an example of an optimization device that uses a copy (replica) of a certain state (a spin bit string depending on different temperature parameters) to search for a solution independently for each replica. For example, a personal computer (PC) or the like can be applied as the information processing device 1.

Note that, in the illustrated example, the number of replicas is three, but the number of replicas is not limited to three. Furthermore, the present embodiment will take as an example a case where simulated annealing (SA) using an Ising-type energy function is employed as an application target of the replica method, but the application target of the replica method may be the stochastic gradient descent (SGD) or belief propagation (BP).

The replicas 20a, 20b, and 20c include Markov Chain Monte Carlo methods (MCMC) units 21a, 21b, and 21c that perform MCMC.

The MCMC units 21a, 21b, and 21c perform MCMC based on, for example, a metropolis standard, using a spin bit string ($s^a$) indicating the current state of each replica, a reference bit ($s^R$), and a Hamiltonian H(s). As a result, the MCMC units 21a, 21b, and 21c work out spin bit strings ($s^1$, $s^2$, $s^3$) indicating the states at a later time, by evolving the states of the respective replicas over time. Note that, in the following description, the "spin bit string indicating the state" is simply referred to as the "state".

The reference bit generation unit 30 is a processing unit that generates (calculates) a reference bit ($s^R$) to be referred to by each replica, based on the states ($s^1$, $s^2$, $s^3$) of the respective replicas (20a, 20b, 20c) at a predetermined time. For example, the reference bit generation unit 30 is an example of a generation unit.

For example, the reference bit generation unit 30 takes a majority vote for each bit in the bit strings of the states ($s^1$, $s^2$, $s^3$) of the respective replicas (20a, 20b, 20c) (assigns 0 for bits, a larger part of which have 0, and assigns 1 for bits, a larger part of which have 1), to generate the reference bit ($s^R$).

Furthermore, the reference bit generation unit 30 may employ, as the reference bit ($s^R$), the state of a replica (minimum_spin) that has the minimum energy among all replicas, instead of the majority vote for each bit. For example, the reference bit generation unit 30 employs, as the reference bit ($s^R$), the state of a replica that has the minimum energy (minimum_spin) among the states ($s^1$, $s^2$, $s^3$) of the respective replicas (20a, 20b, 20c).

Note that, in the state (s), a 2-way-1-hot constraint is imposed in some cases. The 2-way-1-hot constraint is a constraint in which only one element has 1 in both of the row and column of the two-dimensional array (most of the elements have 0).

For example, s takes the numerical values 0 and 1 instead of +1 and -1. When this is expressed as X because it is confusing, a relationship of $X_i = (1 + s_i)/2$ holds.

When the 2-way-1-hot constraint is imposed, if the reference bit is generated based on the majority vote, all the reference bits will have 0.

In such a case where the 2-way-1-hot constraint is imposed, the reference bit generation unit 30 may perform addition on all replicas for each bit, instead of the majority vote for each bit, which means to employ a value obtained by taking a histogram as the reference bit ($s^R$).

The control unit 10 corresponds to an electronic circuit such as a central processing unit (CPU), for example, and controls the operation of the information processing device 1. For example, the control unit 10 includes an internal memory for storing programs defining various processing procedures and control data, and executes diverse types of processing using the programs and the control data when searching for a solution using the replica method.

For example, the control unit 10 causes each of the replicas (20a, 20b, 20c) to refer to the reference bit ($s^R$) generated by the reference bit generation unit 30 and perform MCMC. As a result, the control unit 10 obtains the state at the next time for each of the replicas (20a, 20b, 20c) by evolving the state of each replica over time. In this manner, the information processing device 1 searches for a state (optimum solution) in which the energy takes the minimum value, by evolving the state of each replica over time.

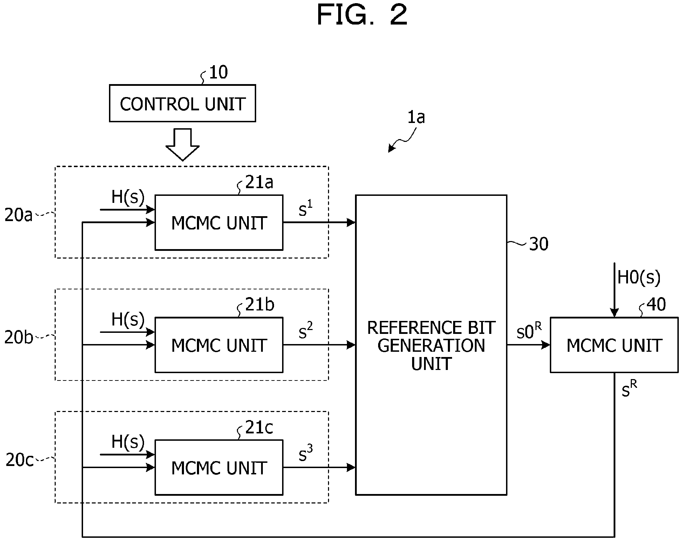

FIG. 2 is a block diagram illustrating a modification of the functional configuration of the information processing device according to the embodiment. As illustrated in FIG. 2, an information processing device 1a according to the modification differs from the information processing device 1 in that the information processing device 1a includes an MCMC unit 40.

The MCMC unit 40 performs MCMC on a reference bit ($s0^R$) generated by the reference bit generation unit 30 in a predetermined number of steps with a Hamiltonian H0(s) that does not consider the interaction (without interaction). The control unit 10 employs, as the final reference bit ($s^R$), a state obtained by the MCMC unit 40 trying MCMC, and causes each of the replicas (20a, 20b, 20c) to refer to the final reference bit. Note that the number of steps in which the MCMC unit 40 tries MCMC may be freely set by a user or the like.

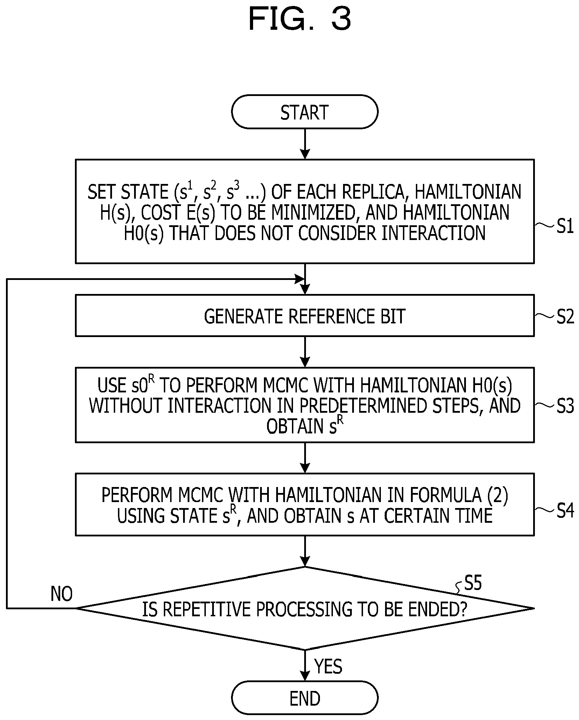

FIG. 3 is a flowchart illustrating an exemplary operation of the information processing device according to the embodiment. As illustrated in FIG. 3, when the processing is started, the control unit 10 sets the state ($s^1$, $s^2$, $s^3$...) of each replica, the Hamiltonian H(s), a cost E(s) to be minimized, and the Hamiltonian H0(s) that does not consider the interaction. The cost E(s) is a formula desired to be minimized by optimization (for which the optimum solution is to be worked out). These settings are made on the basis of initial setting values or the like, for example, input by the user.

Subsequently, the control unit 10 searches for the optimum solution by repeating the processing in S2 to S5 to evolve the state of each replica over time. Note that the processing in S2 to S5 represents an operation example of the information processing device 1a including the MCMC unit 40, and in the case of the information processing device 1, it suffices to skip the processing in S3 performed by the MCMC unit 40 and read $s0^R$ as $s^R$.

After S1, the reference bit generation unit 30 generates the reference bit ($s0^R$) by taking a majority vote for each bit, for example, as indicated by following formula (1) (S2). Note that j in formula (1) denotes a bit number.

$$s0_j^R = sign\left(\sum_y s_j^y\right) \qquad \cdots (1)$$

Subsequently, the MCMC unit 40 uses the generated reference bit ($s0^R$) to perform MCMC with the Hamiltonian H0(s) without interaction in predetermined steps. Note that H0(s) = E(s) holds. As a result, the control unit 10 obtains the final reference bit ($s^R$) after MCMC has been tried (S3).

Subsequently, the MCMC units 21a, 21b, and 21c of the relevant replicas perform MCMC with the Hamiltonian H(s) in following formula (2) containing an interaction ($\gamma$), using the state ($s^R$), and obtain states (s) at a certain time (S4).

$$H(s) = E(s) + I(\hat{\gamma}, s^R, s) \qquad \cdots (2)$$

In formula (2), $\gamma$ may be fixed, or may be gradually strengthened or weakened with time. Furthermore, I denotes an increasing or decreasing function of the distance between the reference and the replica. For example, I is given as following formula (3) when it is effective for each replica to search the periphery of the reference (it becomes easier to obtain the optimum solution). Note that, when it becomes easier to obtain the optimum solution by avoiding the search of the vicinity of the reference, I is given as a formula in which the minus before $\gamma$ in formula (3) is changed to the plus.

$$I(\hat{\gamma}, s^R, s) = -\hat{\gamma} \sum_{j=1}^{N} s_j^R s_j \qquad \cdots (3)$$

Subsequently, the control unit 10 determines whether or not to end the repetitive processing (S5). For example, the control unit 10 determines that the processing is to be ended when the processing has been repeated by a predetermined number of steps, or when the minimum value of E(s) has been obtained. When the repetitive processing is continued (S5: No), the control unit 10 returns the processing to S2. Furthermore, when the repetitive processing is to be ended (S5: Yes), the control unit 10 ends the processing assuming that the optimum solution has been obtained.

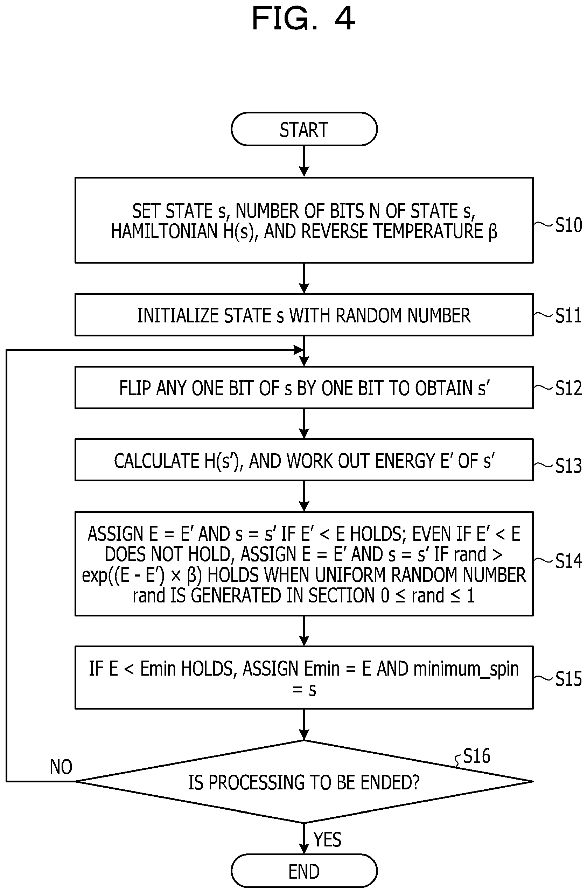

FIG. 4 is a flowchart illustrating exemplary processing of MCMC. As illustrated in FIG. 4, once the above-mentioned processing relating to S4 is started, the MCMC units 21a, 21b, and 21c are set with the bit state (s), the number of bits (N), the Hamiltonian H(s), and a reverse temperature (β) (S10).

Subsequently, the MCMC units 21a, 21b, and 21c initialize the states (s) with a random number (S11). Note that the MCMC units 21a, 21b, and 21c set H(s) as the initial value for the energy and the minimum energy. For example, E = H(s) is assigned for energy (E), and Emin = E is assigned for the minimum value of E (Emin). Furthermore, minimum_spin = s is assigned for the Emin spin (minimum_spin).

Subsequently, the MCMC units 21a, 21b, and 21c flip any one bit of s by one bit to obtain s' (S12). The bit to be flipped is set with a random number or the like.

Subsequently, the MCMC units 21a, 21b, and 21c calculate H(s'), and work out an energy (E') of s' (S13).

Thereafter, the MCMC units 21a, 21b, and 21c adopt s' if E' < E holds, and assign E = E' and s = s'. Even if E' < E does not hold, the MCMC units 21a, 21b, and 21c stochastically adopt s' (S14).

For example, the MCMC units 21a, 21b, and 21c generate a uniform random number (rand) in the section $0 \leq$ rand $\leq 1$, and if rand > exp((E - E') × β) holds, assign E = E' and s = s'.

Subsequently, the MCMC units 21a, 21b, and 21c record the states in which the minimum energy is given. For example, if E < Emin holds, the MCMC units 21a, 21b, and 21c assign Emin = E and minimum_spin = s (S15).

Subsequently, the MCMC units 21a, 21b, and 21c determine whether or not an end condition is satisfied (S16). For example, the MCMC units 21a, 21b, and 21c assume that the end condition is satisfied when the loop is made for a predetermined number of steps or when Emin takes the minimum value. Furthermore, when all the bits are flipped in one step, the end condition may be prescribed by whether or not the loop is made for the number of times obtained by the number of steps × the number of bits.

When the end condition is satisfied (S16: Yes), the MCMC units 21a, 21b, and 21c end the processing. When the end condition is not satisfied (S16: No), the MCMC units 21a, 21b, and 21c return the processing to S12.

As described above, the information processing device 1 that searches for a solution using the replica exchange method includes the plurality of replicas 20a, 20b, and 20c that each search for a solution, the reference bit generation unit 30, and the control unit 10. The reference bit generation unit 30 generates the reference bit ($s^R$) to be referred to by each of the plurality of replicas 20a, 20b, and 20c, based on first states of respective replicas of the plurality of replicas 20a, 20b, and 20c at a predetermined time. The control unit 10 causes each of the plurality of replicas 20a, 20b, and 20c to refer to the generated reference bit ($s^R$), and obtains states at a time later than the predetermined time.

Therefore, since the information processing device 1 has a configuration in which each replica refers to the reference bit ($s^R$), each replica does not refer to all the other replicas thoroughly in order to calculate the interaction term as in the conventional replica method, and the optimum solution may be obtained at higher speed.

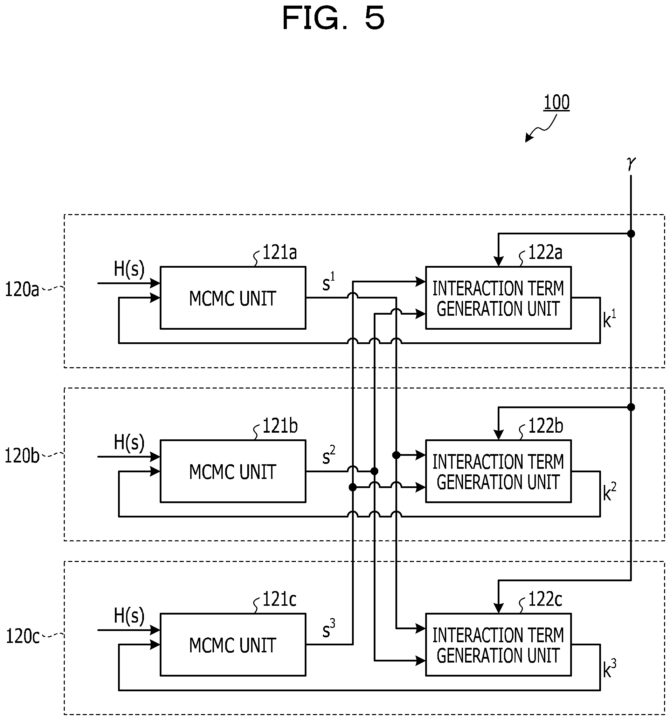

FIG. 5 is a block diagram illustrating an exemplary functional configuration of an information processing device that carries out the conventional replica method. As illustrated in FIG. 5, in an information processing device 100 that carries out the conventional replica method, replicas 120a, 120b, and 120c include MCMC units 121a, 121b, and 121c, and interaction term generation units 122a, 122b, and 122c that refer to all the other replicas thoroughly to calculate (generate) the interaction terms, respectively.

The interaction term generation units 122a, 122b, and 122c calculate the interaction terms ($k^1$, $k^2$, $k^3$) at regular intervals (for example, every one Monte Carlo step) such that the interaction term becomes larger if replicas other than their own replicas are more similar to each other, and the interaction term becomes smaller if replicas other than their own replicas are less similar to each other. Moreover, the interaction term generation units 122a, 122b, and 122c multiply the bits of their own replicas ($s^1$, $s^2$, $s^3$) by k such that, if the bits of the whole and their own replicas resemble each other, the values become even larger, and subtract the obtained values from the energy function.

In the operation in the interaction term generation units 122a, 122b, and 122c described above, in the information processing device 100, if the states ($s^1$, $s^2$, $s^3$) of the respective replicas are similar, the energy becomes smaller and more easily accepted. For this reason, in the information processing device 100, the states of replicas are made more resemble each other with evolution over time. In this case, the Hamiltonian H(s) for the bit state s $\in$ {-1, +1} is given as following formula (4).

$$H(s) = E(s) - \frac{1}{\beta} \sum_{j=1}^{N} k_j\, s_j \qquad \cdots (4)$$

Here, β denotes the reverse temperature, j denotes the number assigned to the bit, and N denotes the number of bits. Furthermore, $k_j$ is as indicated by following formula (5).

$$k_j = \frac{1}{2}\left( log\left( \frac{\cosh\left(\gamma + \gamma \sum_{b \neq a} s_j^b\right)}{\cosh\left(-\gamma + \gamma \sum_{b \neq a} s_j^b\right)} \right) \right) \qquad \cdots (5)$$

Here, $\gamma$ denotes the strength of the interaction. In the information processing device 100, a result in which the minimum solution has been obtained or the solution has been obtained at higher speed among relevant replicas (for example, 20a, 20b, 20c) is adopted.

In such an information processing device 100, when the number of replicas is assumed as n, since all the other replicas are thoroughly referred to in order to calculate the interaction term, the number of references is given as $n^2$ + $(n - 1) \times n$. On the other hand, in the present embodiment, the number of references (corresponding to the number of arrows denoted by $s^1$, $s^2$, $s^3$ and $s^R$ in FIGs. 1 and 2) is reduced to 2n.

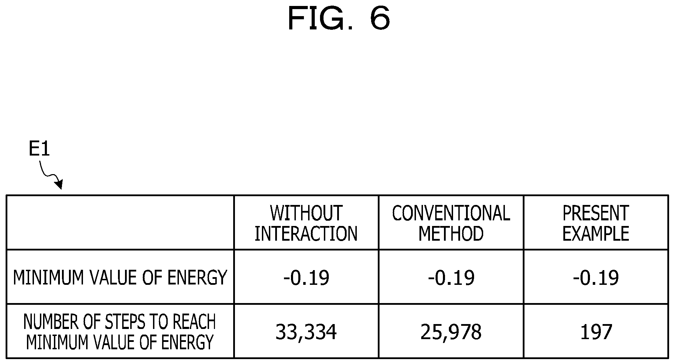

FIG. 6 is an explanatory diagram explaining a comparative example in a ferromagnetic model. In a comparative example E1 in FIG. 6, the case without interaction, the case of the conventional replica method, and the case of the present example are compared in regard to the search for the optimum solution (the minimum value of energy) in a ferromagnetic model (FT).

Note that the Hamiltonian H(s) in the ferromagnetic model (FT) is as indicated by following formula (6). It is assumed that $J_{0coef}$ has 0.001. Furthermore, the number of replicas when searching for the optimum solution is assumed as five.

$$E(s) = -J_{0coef} \sum_{j < i} s_i s_j \qquad \cdots (6)$$

As illustrated in FIG. 6, in the present example, the number of steps to reach the optimum solution is significantly decreased as compared with the case where a search for the optimum solution is performed by the conventional replica method. For example, in the present example, the load of reference may be lowered by creating the reference bit, and the optimum solution may be obtained at a higher speed.

Furthermore, the reference bit generation unit 30 generates the reference bit ($s^R$) based on a majority vote for each bit that indicates the state of each of the replicas 20a, 20b, and 20c. As a result, the information processing device 1 can search for a solution by a majority vote by the states of the respective replicas 20a, 20b, and 20c.

In addition, the reference bit generation unit 30 generates the reference bit ($s^R$) based on the state of a replica having the minimum energy among the states of the respective replicas 20a, 20b, and 20c. As a result, the information processing device 1 may search for a state (minimum solution) in which the energy is minimized at a higher speed in the search for a solution using the replica exchange method.

Additionally, the reference bit generation unit 30 generates the reference bit ($s^R$) based on a histogram obtained by adding bits that indicate the states of the respective replicas 20a, 20b, and 20c, for each bit. For example, when the 2-way-1-hot constraint is imposed to the state (s), only one element has 1 in both of the row and column of the two-dimensional array, and most of the elements have 0. Therefore, when the reference bit is generated based on the majority vote, all the reference bits will have 0. On the other hand, by generating the reference bit based on the histogram, the reference bit may be restrained from dropping to 0.

In addition, in regard to the generated reference bit ($s0^R$), the control unit 10 causes each of the replicas 20a, 20b, 20c to refer to the reference bit ($s^R$) after the MCMC unit 40 has tried the Monte Carlo method in a predetermined number of steps with a Hamiltonian without interaction. Even when a search for a solution is made in this manner, the load of reference can be lowered because all the other replicas are not thoroughly referred to in units of bits.

Note that the components of each of the illustrated devices are not necessarily and physically configured as illustrated in the drawings. In other words, the specific aspects of separation and integration of each of the apparatuses and devices are not limited to the illustrated aspects, and all or some of the apparatuses or devices can be functionally or physically separated and integrated in any unit, in accordance with various loads, use status, and the like.

In addition, various processing functions executed with the information processing device 1 may be entirely or optionally partially executed on a central processing unit (CPU) (or a microcomputer such as a microprocessor unit (MPU) or a micro controller unit (MCU)). Furthermore, it is needless to say that whole or any part of various processing functions may be executed by a program to be analyzed and executed on a CPU (or microcomputer such as MPU or MCU), or on hardware by wired logic. In addition, various processing functions executed with the information processing device 1 may be executed by a plurality of computers in cooperation through cloud computing.

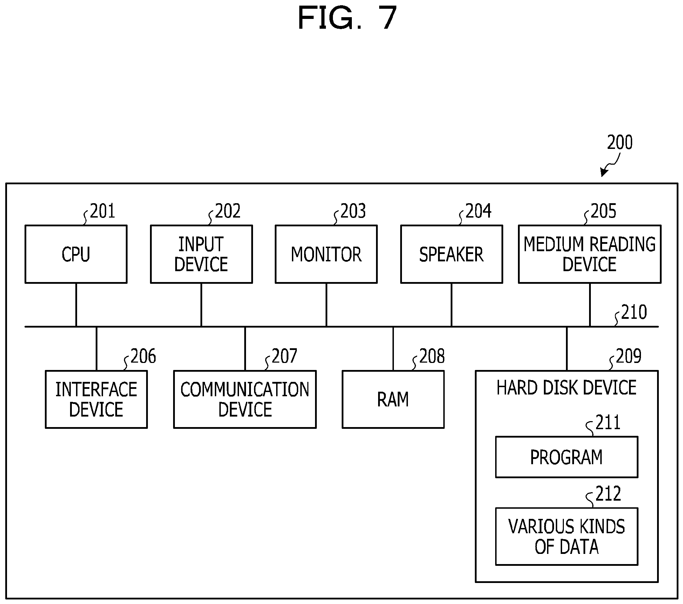

Meanwhile, the various kinds of processing described in the above embodiment can be achieved by execution of a prepared program on a computer. Thus, there will be described below an example of a computer (hardware) that executes a program having functions similar to the above embodiment. FIG. 7 is a block diagram illustrating an example of a computer configuration.

As illustrated in FIG. 7, a computer 200 includes a CPU 201 that executes various kinds of arithmetic processing, an input device 202 that receives data input, a monitor 203, and a speaker 204. In addition, the computer 200 includes a medium reading device 205 that reads a program and the like from a storage medium, an interface device 206 that is used for connecting to various devices, and a communication device 207 that makes communicative connection with an external device in a wired or wireless manner. Furthermore, the computer 200 includes a random access memory (RAM) 208 that temporarily stores various kinds of information, and a hard disk device 209. Moreover, each part (201 to 209) in the computer 200 is connected to a bus 210.

The hard disk device 209 stores a program 211 used to execute various kinds of processing of the control unit 10, the replicas 20a, 20b, and 20c, the reference bit generation unit 30, the MCMC unit 40, and the like described above in the embodiment. Furthermore, the hard disk device 209 stores various kinds of data 212 to which the program 211 refers. The input device 202 receives, for example, an input of operation information from an operator. The monitor 203 displays, for example, various screens operated by the operator. The interface device 206 is connected to, for example, a printing device or the like. The communication device 207 is connected to a communication network such as a local area network (LAN), and exchanges various kinds of information with the external device via a communication network.

The CPU 201 reads out the program 211 stored in the hard disk device 209, and expands the read-out program 211 into the RAM 208 to execute, thereby performing various kinds of processing relating to the control unit 10, the replicas 20a, 20b, and 20c, the reference bit generation unit 30, the MCMC unit 40, and the like. Note that the program 211 may not be prestored in the hard disk device 209. For example, the computer 200 may read out the program 211 stored in a storage medium that is readable by the computer 200 and may execute the program 211. The storage medium that is readable by the computer 200 corresponds to, for example, a portable recording medium such as a compact disk read only memory (CD-ROM), a digital versatile disk (DVD), or a universal serial bus (USB) memory, a semiconductor memory such as a flash memory, a hard disk drive, or the like. Alternatively, the program 211 may be prestored in a device connected to a public line, the Internet, a LAN, or the like, and the computer 200 may read out the program 211 from the device to execute the program 211.

[Reference Signs List]

1, 1a, 100information processing device
10control unit
20a to 20c, 120a to 120creplica
21a to 20c, 121a to 121cMCMC unit
30reference bit generation unit
40MCMC unit
122a to 122cinteraction term generation unit
E1comparative example
200computer
201CPU
202input device
203monitor
204speaker
205medium reading device
206interface desvice
207communication device
208RAM
209hard disk device
210bus
211program
212various kinds of data

[Citation List]

"Unreasonable effectiveness of learning neural networks: From accessible states and robust ensembles to basic algorithmic schemes", Baldassi, Carlo. Et. Al., ArXiv: 1605.06444v3/PNAS E7655-E7662, Published online November 15, 2016

**Claims**

1. An optimization device of searching for a solution using a replica exchange method,
the optimization device comprising:

    a plurality of replicas that each search for a solution;
    a generation unit that generates a reference bit to be referred to by each of the plurality of replicas, based on first states of respective replicas of the plurality of replicas at a time that is predetermined; and
    a control unit that causes each of the plurality of replicas to refer to the generated reference bit, and specifies second states at a time later than the time.

2. The optimization device according to claim 1, wherein
the generation unit generates the reference bit based on a majority vote for each of bits that indicate the first states of respective replicas of the plurality of replicas.

3. The optimization device according to claim 1, wherein
the generation unit generates the reference bit based on a state of a replica that has a minimum energy, among the first states of respective replicas of the plurality of replicas.

4. The optimization device according to claim 1, wherein
the generation unit generates the reference bit based on a histogram obtained by adding bits that indicate the first states of respective replicas of the plurality of replicas, for each bit.

5. The optimization device according to any one of claims 1 to 4, wherein
in regard to the generated reference bit, the control unit causes each of the plurality of replicas to refer to the reference bit after a Monte Carlo method has been tried in a predetermined number of steps with a Hamiltonian without interaction.

6. An optimization program comprising instructions which, when the program is executed by a computer configured to search for a solution using a replica exchange method, cause the computer to carry out processing, the processing comprising:

    generating a reference bit to be referred to by each of a plurality of replicas, based on first states of respective replicas of the plurality of replicas at a time that is predetermined;
    causing each of the plurality of replicas to refer to the generated reference bit; and
    specifying second states at a time later than the time.

7. The optimization program according to claim 6, wherein
the generating the reference bit generates the reference bit based on a majority vote for each of bits that indicate the first states of respective replicas of the plurality of replicas.

8. The optimization program according to claim 6, wherein
the generating the reference bit generates the reference bit based on a state of a replica that has a minimum energy, among the first states of respective replicas of the plurality of replicas.

9. The optimization program according to claim 6, wherein
the generating the reference bit generates the reference bit based on a histogram obtained by adding bits that indicate the first states of respective replicas of the plurality of replicas, for each bit.

10. The optimization program according to any one of claims 11 to 14, wherein
in regard to the generated reference bit, the specifying the second states causes each of the plurality of replicas to refer to the reference bit after a Monte Carlo method has been tried in a predetermined number of steps with a Hamiltonian without interaction.

11. An optimization method implemented by a computer configured to search for a solution using a replica exchange method, the optimization method comprising:

generating a reference bit to be referred to by each of a plurality of replicas, based on first states of respective replicas of the plurality of replicas at a time that is predetermined;

causing each of the plurality of replicas to refer to the generated reference bit; and

specifying second states at a time later than the time.

12. The optimization method according to claim 11, wherein
the generating the reference bit generates the reference bit based on a majority vote for each of bits that indicate the first states of respective replicas of the plurality of replicas.

13. The optimization method according to claim 11, wherein
the generating the reference bit generates the reference bit based on a state of a replica that has a minimum energy, among the first states of respective replicas of the plurality of replicas.

14. The optimization method according to claim 11, wherein
the generating the reference bit generates the reference bit based on a histogram obtained by adding bits that indicate the first states of respective replicas of the plurality of replicas, for each bit.

15. The optimization method according to any one of claims 11 to 14, wherein
in regard to the generated reference bit, the specifying the second states causes each of the plurality of replicas to refer to the reference bit after a Monte Carlo method has been tried in a predetermined number of steps with a Hamiltonian without interaction.

# FIG. 1

# FIG. 2

# FIG. 3

START

SET STATE ($s^1$, $s^2$, $s^3$ ...) OF EACH REPLICA, HAMILTONIAN H(s), COST E(s) TO BE MINIMIZED, AND HAMILTONIAN H0(s) THAT DOES NOT CONSIDER INTERACTION ~S1

GENERATE REFERENCE BIT ~S2

USE $s0^R$ TO PERFORM MCMC WITH HAMILTONIAN H0(s) WITHOUT INTERACTION IN PREDETERMINED STEPS, AND OBTAIN $s^R$ ~S3

PERFORM MCMC WITH HAMILTONIAN IN FORMULA (2) USING STATE $s^R$, AND OBTAIN s AT CERTAIN TIME ~S4

NO — IS REPETITIVE PROCESSING TO BE ENDED? ⟨S5

YES

END

# FIG. 4

```
                    ┌─────────────┐
                    │    START    │
                    └─────────────┘
                           │
                           ▼
    ┌──────────────────────────────────────────┐
    │ SET STATE s, NUMBER OF BITS N OF STATE s, │  ~S10
    │ HAMILTONIAN H(s), AND REVERSE TEMPERATURE β│
    └──────────────────────────────────────────┘
                           │
                           ▼
    ┌──────────────────────────────────────────┐
    │   INITIALIZE STATE s WITH RANDOM NUMBER    │  ~S11
    └──────────────────────────────────────────┘
                           │
                           ▼
    ┌──────────────────────────────────────────┐
    │  FLIP ANY ONE BIT OF s BY ONE BIT TO OBTAIN s'  │  ~S12
    └──────────────────────────────────────────┘
                           │
                           ▼
    ┌──────────────────────────────────────────┐
    │ CALCULATE H(s'), AND WORK OUT ENERGY E' OF s'   │  ~S13
    └──────────────────────────────────────────┘
                           │
                           ▼
    ┌──────────────────────────────────────────┐
    │ ASSIGN E = E' AND s = s' IF E' < E HOLDS; EVEN IF E' < E │  ~S14
    │ DOES NOT HOLD, ASSIGN E = E' AND s = s' IF rand >        │
    │ exp((E - E') × β) HOLDS WHEN UNIFORM RANDOM NUMBER       │
    │ rand IS GENERATED IN SECTION 0 ≤ rand ≤ 1               │
    └──────────────────────────────────────────┘
                           │
                           ▼
    ┌──────────────────────────────────────────┐
    │ IF E < Emin HOLDS, ASSIGN Emin = E AND minimum_spin = s │  ~S15
    └──────────────────────────────────────────┘
                           │
                           ▼
         NO     ◇─────────────────────────◇  S16
        ◄───────  IS PROCESSING TO BE ENDED?
                  ◇─────────────────────────◇
                           │ YES
                           ▼
                    ┌─────────────┐
                    │     END     │
                    └─────────────┘
```

# FIG. 5

# FIG. 6

E1

| | WITHOUT INTERACTION | CONVENTIONAL METHOD | PRESENT EXAMPLE |
|---|---|---|---|
| MINIMUM VALUE OF ENERGY | -0.19 | -0.19 | -0.19 |
| NUMBER OF STEPS TO REACH MINIMUM VALUE OF ENERGY | 33,334 | 25,978 | 197 |

# FIG. 7

200

| | | | | |
|---|---|---|---|---|
| 201 | 202 | 203 | 204 | 205 |
| CPU | INPUT DEVICE | MONITOR | SPEAKER | MEDIUM READING DEVICE |

210

| | | | |
|---|---|---|---|
| 206 | 207 | 208 | 209 |
| INTERFACE DEVICE | COMMUNICATION DEVICE | RAM | HARD DISK DEVICE |

HARD DISK DEVICE

211
PROGRAM

212
VARIOUS KINDS OF DATA

Europäisches
Patentamt

European
Patent Office

Office européen
des brevets

# EUROPEAN SEARCH REPORT

Application Number

EP 21 15 4731

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/090026 A1 (SHIBASAKI TAKAYUKI [JP]) 19 March 2020 (2020-03-19) * claim 7 * | 1-15 | INV. G06F17/11 |
| X | US 2018/349325 A1 (OKUYAMA TAKUYA [JP] ET AL) 6 December 2018 (2018-12-06) * claim 1 * | 1-15 | |
| X | US 2019/286077 A1 (KOYAMA JUMPEI [JP] ET AL) 19 September 2019 (2019-09-19) * claim 5 * | 1-15 | |
| X | US 2019/130295 A1 (OKUYAMA TAKUYA [JP] ET AL) 2 May 2019 (2019-05-02) * claim 13 * | 1-15 | |

TECHNICAL FIELDS
SEARCHED      (IPC)

G06F

The present search report has been drawn up for all claims

| Place of search | Date of completion of the search | Examiner |
|---|---|---|
| Munich | 18 June 2021 | May, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 4731

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2021

| Patent document cited in search report | | Publication date | Patent family member(s) | | Publication date |
|---|---|---|---|---|---|
| US 2020090026 | A1 | 19-03-2020 | JP 2020046718 A<br>US 2020090026 A1 | | 26-03-2020<br>19-03-2020 |
| US 2018349325 | A1 | 06-12-2018 | JP 6841722 B2<br>JP 2018206127 A<br>US 2018349325 A1 | | 10-03-2021<br>27-12-2018<br>06-12-2018 |
| US 2019286077 | A1 | 19-09-2019 | JP 2019160169 A<br>US 2019286077 A1 | | 19-09-2019<br>19-09-2019 |
| US 2019130295 | A1 | 02-05-2019 | JP 2019082793 A<br>US 2019130295 A1 | | 30-05-2019<br>02-05-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BALDASSI, CARLO.** Unreasonable effectiveness of learning neural networks: From accessible states and robust ensembles to basic algorithmic schemes. *ArXiv: 1605.06444v3/PNAS,* 15 November 2016, E7655-E7662